# EUROPÄISCHE PATENTSCHRIFT

(11) **EP 1 096 750 B1**
(45) Veröffentlichungstag und Bekanntmachung des Hinweises auf die Patenterteilung: **07.09.2005**
(21) Anmeldenummer: 00122149.8
(22) Anmeldetag: 12.10.2000
(51) Int. Cl.: H04L 12/56, H04L 12/24

(54) **Verfahren zum Einrichten eines geschützten Kommunikationssegments zwischen zwei Netzelementen eines Telekommunikationsnetzes sowie entsprechendes Telekommunikationsnetz**
Method and system for configuring protected communication segments between two network elements from a network
Procédé et système pour configurer des segments sécurisés entre deux noeuds d'un réseau de communications

(30) Priorität: 20.10.1999 DE 19950546
(43) Veröffentlichungstag der Anmeldung: 02.05.2001
(73) Patentinhaber: SIEMENS AKTIENGESELLSCHAFT, 80333 München (DE)
(72) Erfinder: Mutz, Martin, 86938 Schondorf/Ammersee (DE); Sarfert, Thomas, 85598 Baldham (DE)

(56) Entgegenhaltungen:
- WO-A-97/42729
- US-A- 5 825 301
- US-A- 5 958 063

## Beschreibung

Die vorliegende Erfindung betrifft ein Verfahren zum Einrichten eines geschützten Kommunikationssegments zwischen zwei Netzelementen eines Telekommunikationsnetzes nach dem Oberbegriff des Anspruches 1 sowie ein entsprechendes Telekommunikationsnetz nach dem Oberbegriff des Anspruches 6.

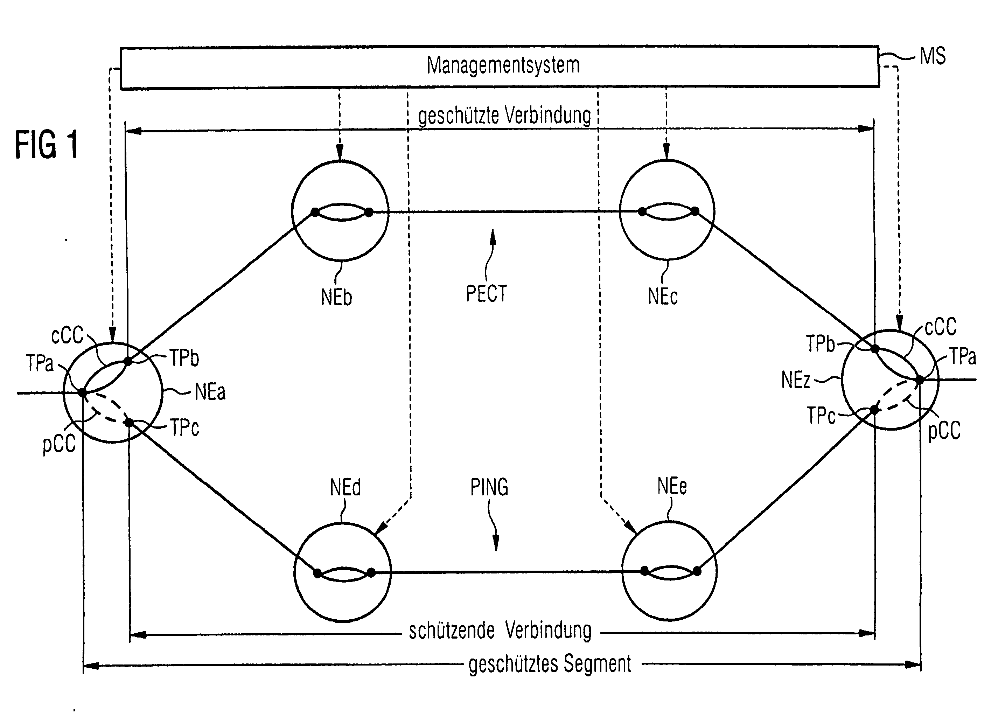

In Fig. 1 ist ein derartiges geschütztes Segment eines Telekommunikationsnetzes dargestellt, welches eine geschützte Verbindung PECT (für "Protected") und eine diese Verbindung schützende Verbindung PING (für "Protecting) umfaßt. Bei dem in Fig. 1 gezeigten Beispiel verläuft die geschützte Verbindung PECT von einem Netzelement NEa über Netzelemente NEb und NEc zu einem Netzelement NEz. Die schützende Verbindung verläuft über zwischengeschaltete Netzelemente NEd und NEe parallel zu der geschützten Verbindung PECT, d.h. ebenfalls zwischen den Netzelementen NEa und NEz. Das Schalten bzw. Einrichten der geschützten Verbindung PECT und der schützenden Verbindung PING wird, wie nachfolgend noch näher erläutert wird, von einem Managementsystem MS des Telekommunikationsnetzes veranlaßt.

Die einzelnen Netzelemente NEa...NEz sind über entsprechende Anschlußpunkte ("Termination Point") mit einem benachbarten Netzelement verbunden, wobei die zu ein und derselben Verbindung gehörenden Anschlußpunkte eines Netzelements über eine sogenannte Querverbindung ("Cross Connection") verbunden sind. Bei dem in Fig. 1 gezeigten Beispiel umfassen die beiden Netzelemente NEa und NEz, zwischen denen die beiden Verbindungen PECT und PING verlaufen, daher Anschlußpunkte TPa...TPc, wobei zwischen den beiden Anschlußpunkten TPa und TPb der Netzelemente NEa und NEz jeweils eine zu der geschützten Verbindung PECT beitragende und daher den Kommunikationsverkehr leitende Querverbindung cCC eingerichtet werden muß, während zwischen den beiden Anschlußpunkten TPa und TPc der Netzelemente NEa und NEz jeweils eine zu der schützenden Verbindung PING beitragende schützende Querverbindung pCC eingerichtet werden muß.

Das Managementsystem MS weist jeder einzelnen Querverbindung ein Attribut zu, welches ihre Funktion eindeutig charakterisiert. Dieses Attribut kann beispielsweise die Werte "connected", "protecting" und "not connected" annehmen. Besitzt eine Querverbindung das Attribut "connected", bedeutet dies, daß diese Querverbindung den eigentlichen Kommunikationsverkehr leitet. Diese Querverbindungen werden nachfolgend mit "cCC" (für "connected Cross Connection") bezeichnet und sind in Fig. 1 in Form von durchgezogenen Doppellinien innerhalb der einzelnen Netzelemente NEa...NEz dargestellt. Besitzt eine Querverbindung das Attribut "protecting", bedeutet dies, daß diese Querverbindung eine Schutzfunktion für eine andere Querverbindung besitzt, mit der sie genau einen Anschlußpunkt gemeinsam hat und welche das Attribut "connected" aufweist. Querverbindungen werden nachfolgend mit "pCC" (für "protecting Cross Connection") bezeichnet und sind in Fig. 1 in Form von gestrichelten Doppellinien dargestellt. Eine Querverbindung, welche das Attribut "not connected" besitzt, wird wie eine nicht vorhandene Querverbindung behandelt. Dieses Attribut spielt lediglich für die Reihenfolge der Erzeugung der schützenden pCC-Querverbindungen eine Rolle, da für die Erzeugung einer pCC-Querverbindung stets Voraussetzung ist, daß die entsprechende Querverbindung zuvor das Attribut "not connected" besessen hat.

Schützende pCC-Querverbindungen sind nur in denjenigen Netzelementen NEa und NEz vorhanden, in denen eine geschützte Verbindung und eine entsprechende schützende Verbindung verzweigen. Ein Netzelement, in dem sowohl die cCC-Querverbindung der geschützten Verbindung als auch die pCC-Querverbindung der schützenden Verbindung liegen, schaltet den Kommunikationsverkehr automatisch von der cCC-Querverbindung auf die pCC-Querverbindung um, falls eine Unterbrechung des Verkehrs auf der geschützten Verbindung auftritt.

Aus der obigen Beschreibung geht hervor, daß das Einrichten und Schalten der cCC-Querverbindungen und pCC-Querverbindungen von maßgeblicher Bedeutung für die Aktivierung des geschützten Segments bzw. der geschützten Verbindung PECT und der schützenden Verbindung PING ist. Unter einer Aktivierung einer Verbindung wird dabei das physikalische Einrichten der Verbindung verstanden, so daß nach einer erfolgreichen Aktivierung die beiden Endpunkte der entsprechenden Verbindung physikalisch miteinander verbunden sind, wobei beim Einrichten oder Kreieren einer Querverbindung zwei Anschlußpunkte innerhalb eines entsprechenden Netzelements physikalisch miteinander verbunden werden.

Zum Zeitpunkt der Aktivierung des geschützten Segments können jedoch in den beiden Netzelementen NEa und NEz bereits Querverbindungen vorhanden sein, welche vom Betreiber des Telekommunikationsnetzes zuvor lokal geschaltet oder wegen eines Systemfehlers nach einer Schaltung nicht wieder beseitigt worden sind. Im ersteren Fall können über diese bereits vorhandenen Querverbindungen bereits zum Zeitpunkt der Aktivierung des geschützten Segments Kommunikationsinformationen übertragen werden, so daß diese bereits vor der Aktivierung des geschützten Segments vorhandenen Querverbindungen nicht beseitigt oder gelöscht werden dürfen. Auf der anderen Seite besteht das Bedürfnis, das geschützte Segment wunschgemäß zu aktivieren, d.h. bei dem in Fig. 1 gezeigten Beispiel die geschützte Verbindung PECT über die Netzelemente NEa-NEb-NEc-NEz und die schützende Verbindung PING über die Netzelemente NEa-NEd-NEe-NEz laufen zu lassen.

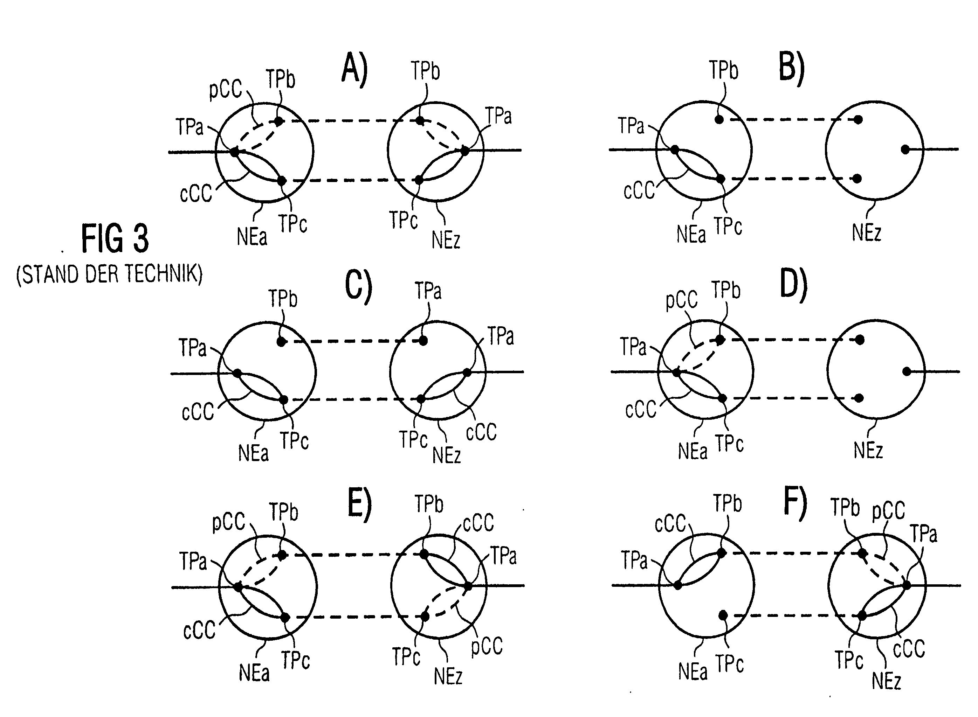

Dieses Problem wurde bisher derart gelöst, daß von dem Managementsystem MS vor der Aktivierung eines geschützten Segments die Konstellation vorhandener lokal geschalteter Querverbindungen in den beiden End-Netzelementen NEa und NEz zusammen betrachtet worden ist, um die geschützte Verbindung PECT und die schützende Verbindung PING zu aktivieren. Die bei dieser Vorgehensweise auftretenden Probleme sollen nachfolgend näher anhand der Darstellungen von Fig. 3 erläutert werden, wobei zu beachten ist, daß das Managementsystem MS das geschützte Segment in Form eines Modells verwaltet, in dem die geschützte Verbindung PECT und die schützende Verbindung PING modelliert sind. Das Modell setzt voraus, daß in Fig. 1 die Anschlußpunkte TPa und TPb der beiden Netzelemente NEa und NEz jeweils durch eine cCC-Querverbindung verbunden werden, während die Anschlußpunkte TPa und TPc jeweils durch eine pCC-Querverbindung verbunden sein müssen. Liegt, wie nachfolgend noch näher anhand Fig. 3 erläutert wird, vor der Aktivierung des geschützten Segments bereits eine Konstellation der Querverbindungen in den beiden Netzelementen NEa und NEz vor, die mit diesem Modell nicht vereinbar ist, kann die Konstellation nicht durch das Modell beschrieben werden. Ein Nichteinhalten dieser Voraussetzungen würde zur Folge haben, daß die Hin- und Rückrichtung des Verkehrs unterschiedlich verläuft (in diesem Fall würde der Verkehr bei der in Fig. 1 gezeigten Anordnung z.B. von NEa nach NEz über NEd und NEe und von NEz nach NEa über NEc und NEb verlaufen), d.h. die Lage der geschützten Verbindung und der schützenden Verbindung ist dann nicht für die Hin- und Rückrichtung des Verkehrs gleich, sondern von der Richtung des Verkehrs abhängig. Ein Modell, welches auch diese Fälle beschreiben könnte, ist zwar grundsätzlich möglich. Es würde jedoch wesentlich aufwendiger sein.

Eine cCC-Querverbindung, d.h. eine Querverbindung mit dem Attribut "connected", kann zwischen zwei Anschlußpunkten (beispielsweise gemäß Fig. 1 zwischen den Anschlußpunkten TPa und TPb) nicht eingerichtet werden, wenn bereits einer dieser beiden Anschlußpunkte mit einer anderen Querverbindung, welche entweder das Attribut "connected" oder das Attribut "protecting" aufweist, verbunden ist. Für die Einrichtung einer pCC-Querverbindung, d.h. einer Querverbindung mit dem Attribut "protecting", ist hingegen, wie bereits erwähnt worden ist, Voraussetzung, daß zwischen den entsprechenden Anschlußpunkten bereits eine Querverbindung mit dem Attribut "not connected" vorhanden ist. Die Einrichtung einer Querverbindung mit dem Attribut "not connected" ist immer möglich. Aus einer Querverbindung mit dem Attribut "not connected" kann jedoch nur dann eine pCC-Querverbindung gemacht werden, wenn einer der beiden Anschlußpunkte (nicht beide) (beispielsweise gemäß Fig. 1 entweder der Anschlußpunkt TPa oder der Anschlußpunkt TPc) bereits mit einer cCC-Querverbindung verbunden ist und diese cCC-Querverbindung nicht bereits durch eine andere pCC-Querverbindung geschützt wird. Diese zuvor erläuterten Adaptierungsregeln für eine Übernahme bereits vorhandener cCC- oder pCC-Querverbindungen müssen somit bei der Einrichtung der einzelnen Querverbindungen in den Netzelementen NEa und NEz eingehalten werden.

Die einzelnen Darstellungen von Fig. 3 zeigen jeweils mögliche Konstellationen für die vor einer Aktivierung des geschützten Segments zwischen den beiden Netzelementen NEa und NEz bereits lokal geschalteten Querverbindungen. Dabei sei angenommen, daß das in Fig. 1 gezeigte geschützte Segment mit der oben verlaufenden geschützten Verbindung PECT und der unten verlaufenden schützen den Verbindung PING aktiviert werden soll. Nachfolgend wird erläutert, wie das bisher bekannte Managementsystem MS auf die in Fig. 3 gezeigten Konstellationen reagierte.

Bei der in Fig. 3A gezeigten Konstellation sind in den beiden Netzelementen NEa und NEz bereits alle vier Querverbindungen vorhanden, wobei diese Querverbindungen allerdings jeweils den falschen Attributwert besitzen, d.h. eine schützende pCC-Querverbindung verläuft jeweils zwischen den Anschlußpunkten TPa und TPb, während eine cCC-Querverbindung zwischen den Anschlußpunkten TPa und TPc vorhanden ist. Dies hat zur Folge, daß in dem Telekommunikationsnetz die geschützte Verbindung unten und die schützende Verbindung oben verläuft und somit die Lage der geschützten Verbindung PECT und die Lage der schützenden Verbindung PING miteinander vertauscht sind. Dieser Sonderfall konnte von dem bisher bekannten Managementsystem MS bereits bewältigt werden, indem vor der Aktivierung des geschützten Segments das Modell entsprechend angepaßt wurde. Anschließend konnte das geschützte Segment erfolgreich aktiviert werden.

Bei der in Fig. 3B gezeigten Konstellation kann unter Berücksichtigung der zuvor erläuterten Adaptierungsregeln die gewünschte cCC-Querverbindung nicht zwischen den Anschlußpunkten TPa und TPb des Netzelements NEa eingerichtet werden, da der Anschlußpunkt TPa bereits mit einer (nach TPc führenden) cCC-Querverbindung verbunden ist. Dasselbe trifft auf die in Fig. 3C gezeigte Konstellation zu, wobei in diesem Fall aus demselben Grund auch in dem Netzelement NEz nicht die gewünschte cCC-Querverbindung zwischen den Anschlußpunkten TPA und TPb eingerichtet werden kann.

Bei der in Fig. 3D gezeigten Konstellation kann die den Verkehr tragende cCC-Querverbindung im Netzelement NEa nicht wunschgemäß zwischen TPa und TPb eingerichtet werden, da der Anschlußpunkt TPa bereits mit zwei Querverbindungen, nämlich einer cCC-Querverbindung zwischen TPa und TPc und einer schützenden pCC-Querverbindung zwischen TPa und TPb, verbunden ist. Es ist somit zwar bereits eine Querverbindung zwischen den Anschlußpunkten TPa und TPb vorhanden, die jedoch das falsche Attribut "protecting" besitzt.
Bei der in Fig. 3E gezeigten Konstellation sind zwar bereits alle vier Querverbindungen vorhanden, wobei jedoch die in dem Netzelement NEa vorhandenen Querverbindungen jeweils das falsche Attribut besitzen. Eine Einrichtung der cCC-Querverbindung zwischen TPa und TPb des Netzelements NEa ist daher analog zu Fig. 3D nicht möglich.

Schließlich ist bei der in Fig. 3F gezeigten Konstellation zwar bereits in dem Netzelement NEa die gewünschte cCC-Querverbindung zwischen den Anschlußpunkten TPa und TPb vorhanden, so daß die noch fehlende schützende pCC-Querverbindung zwischen den Anschlußpunkten TPa und TPc eingerichtet werden könnte. In dem Netzelement NEz kann jedoch analog zu den für das Netzelement NEa in Fig. 3D und 3E gezeigten Fällen nicht die cCC-Querverbindung zwischen den Anschlußpunkten TPa und TPb eingerichtet werden, da bereits eine pCC-Querverbindung, d.h. eine Querverbindung mit dem falschen Attributwert "protecting", vorhanden ist.

Bisher wurde, wie bereits kurz erwähnt worden ist, die Konstellation der bereits lokal geschalteten Querverbindungen in den Netzelementen NEa und NEz zusammen betrachtet, um die Lage der geschützten Verbindung PECT und der schützenden Verbindung PING zu ermitteln (wie z.B. offenbart in US 5958063). Wenn in beiden Netzelementen NEa und NEz bereits alle vier Querverbindungen mit jeweils dem falschen Attribut vorhanden waren (vgl. Fig. 3A), wurden die Rollen der geschützten Verbindung und der schützenden Verbindung in dem Modell des Managementsystems MS vertauscht, um das Modell an die Realität anzupassen. Anschließend wurde die Aktivierung des geschützten Segments mit der gegenüber der ursprünglichen Intention vertauschten Lage der geschützten Verbindung und der schützenden Verbindung durchgeführt.

Die in den Fig. 3B bis 3F gezeigten Konstellationen konnten jedoch bisher nicht adaptiert bzw. aktiviert werden. Insbesondere wurden in diesen Fällen auch nicht die Querverbindungen in den Netzelementen NEb...NEe geschaltet. Statt dessen war in diesen Fällen bisher das zwangsweise Löschen bzw. Beseitigen der bereits vorhandenen und lokal geschalteten Querverbindungen erforderlich, um das geschützte Segment wie gewünscht einrichten zu können. Dies hatte jedoch wiederum zur Folge, daß der bereits über die lokal geschalteten Querverbindungen laufende Verkehr vorübergehend unterbrochen wurde

Der vorliegenden Erfindung liegt daher die Aufgabe zugrunde, ein Verfahren zum Einrichten eines geschützten Kommunikationssegments zwischen zwei Netzelementen eines Telekommunikationsnetzes sowie ein entsprechendes Telekommunikationsnetz vorzuschlagen, mit dem bei der Aktivierung des Kommunikationssegments eine verbesserte Adaptierung, d.h. Übernahme, von bereits vorhandenen Querverbindungen ermöglicht wird.

Diese Aufgabe wird erfindungsgemäß durch ein Verfahren mit den Merkmalen des Anspruches 1 bzw. ein Telekommunikationsnetz mit den Merkmalen des Anspruches 6 gelöst. Die Unteransprüche definieren vorteilhafte und bevorzugte Ausführungsformen der vorliegenden Erfindung.

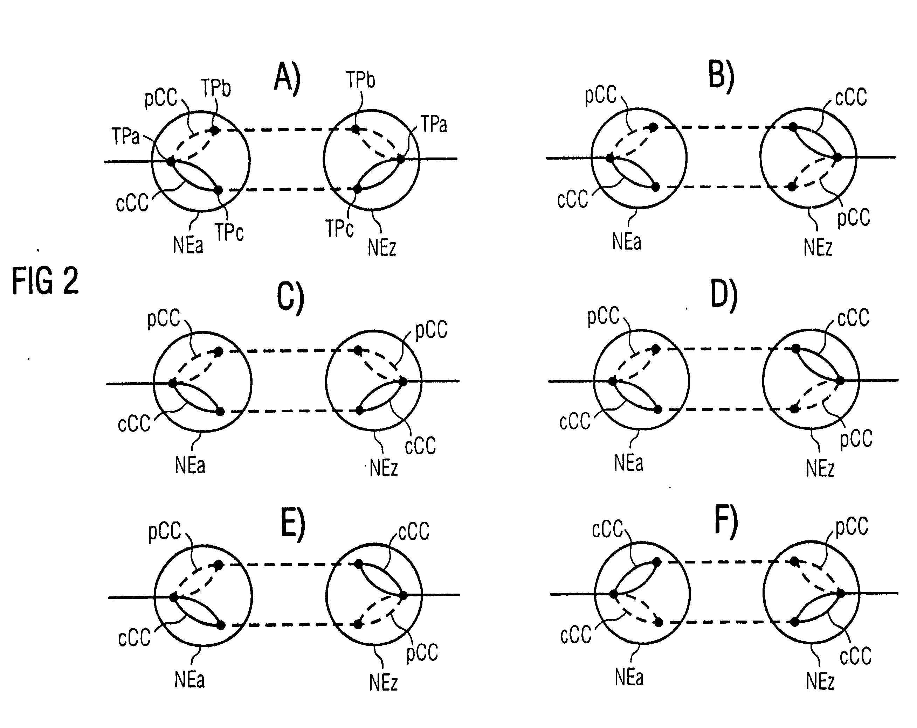

Im Gegensatz zu der bisherigen Vorgehensweise werden erfindungsgemäß die beiden Netzelemente, zwischen denen das geschützte Segment eingerichtet und aktiviert werden soll, nicht gemeinsam, sondern unabhängig voneinander betrachtet. Dadurch wird die Anzahl der zu betrachtenden Konstellationen von vormalig N² auf N reduziert. Durch diese Reduktion ist die vollständige Behandlung aller möglichen Konstellationen von bereits vorhandenen Querverbindungen in diesen beiden Netzelementen mit einem vertretbaren Aufwand-Nutzen-Verhältnis möglich. Insbesondere können durch dieses Vorgehen nunmehr alle in Fig. 2 gezeigten adaptierbaren Konstellationen auch tatsächlich adaptiert, d.h. übernommen werden.
Erst in einem nachfolgenden Schritt werden die Attribute der bereits vorhandenen Querverbindungen überprüft. Sollte eine Konstellation adaptiert worden sein, die nicht mit dem vorhandenen Modell beschreibbar ist, wird vorzugsweise eine entsprechende Warnung an den Betreiber des Telekommunikationsnetzes ausgegeben.

Die Besonderheit der erfindungsgemäßen Lösung besteht somit einerseits darin, daß die beiden Seiten eines geschützten Segments unabhängig voneinander hinsichtlich der bereits vorhandenen Querverbindungen betrachtet werden, und andererseits darin, daß grundsätzlich auch bereits vorhandene oder lokal geschaltete Querverbindungen dann adaptiert werden, wenn die entsprechende Konstellation nicht mit dem vorhandenen Modell beschreibbar ist, d.h. auch bei Vorliegen nicht mit dem Modell beschreibbarer Konstellationen werden die entsprechenden Verbindungen geschaltet, so daß der Verkehr in jedem Fall laufen kann. Durch die in diesen nicht mit dem Modell beschreibbaren Fällen vorgesehene Ausgabe einer Warnung an den Netzbetreiber wird sichergestellt, daß der Netzbetreiber dann entsprechende Maßnahmen ergreifen kann

Die Erfindung wird nachfolgend anhand eines bevorzugten Ausführungsbeispiels unter Bezugnahme auf die beigefügte Zeichnung näher erläutert.
Fig. 1 zeigt verschiedene Komponenten eines geschützten Segments eines Telekommunikationsnetzes, und
Fig. 2A-2F zeigt die erfindungsgemäße Behandlung von verschiedenen in Fig. 3A-3F dargestellten Konstellationen von Querverbindungen, welche bereits vor der Einrichtung des in Fig. 1 gezeigten geschützten Segments vorhanden sein können.

Zur Beschreibung der vorliegenden Erfindung sei zunächst auf die obigen Erläuterungen zu Fig. 1 verwiesen. Auch nachfolgend wird davon ausgegangen, daß das in Fig. 1 gezeigte geschützte Segment eingerichtet werden soll, d.h. die geschützte Verbindung PECT soll über die Netzelemente NEb und NEc laufen, während die schützende Verbindung PING über die Netzelemente NEd und NEe laufen soll. Demzufolge besteht die ursprüngliche Intention darin, zwischen den Anschlußpunkten TPa und TPb der Netzelemente NEa und NEz eine den Verkehr tragende cCC-Querverbindung, d.h. eine Querverbindung mit dem Attribut "connected", und zwischen den Anschlußpunkten TPa und TPc eine schützende pCC-Querverbindung, d.h. eine Querverbindung mit dem Attribut "protecting", einzurichten.

Bei der Einrichtung dieser Querverbindungen müssen, wie bereits beschrieben worden ist, die vor der Aktivierung des geschützten Segments möglicherweise in den beiden Netzelementen NEa und NEz bereits lokal geschalteten Querverbindungen berücksichtigt werden, wobei die folgenden Adaptierungsregeln zu beachten sind.

Zunächst wird von dem Managementsystem MS versucht, in den Netzelementen NEa und NEz unabhängig voneinander die gewünschten cCC- und pCC-Verbindungen zu erzeugen.

Wie bereits erwähnt worden ist, kann eine cCC-Querverbindung, d.h. eine Querverbindung mit dem Attribut "connected", zwischen zwei Anschlußpunkten nicht eingerichtet werden, wenn bereits einer dieser beiden Anschlußpunkte mit einer anderen Querverbindung, welche entweder das Attribut "connected" oder das Attribut "protecting" aufweist, verbunden ist. Für die Einrichtung einer pCC-Querverbindung, d.h. einer Querverbindung mit dem Attribut "protecting", ist hingegen Voraussetzung, daß einer der beiden Anschlußpunkte (nicht beide; beispielsweise gemäß Fig. 1 entweder der Anschlußpunkt TPa oder der Anschlußpunkt TPc) bereits mit einer cCC-Querverbindung verbunden ist und diese cCC-Querverbindung nicht bereits durch eine andere pCC-Querverbindung geschützt wird.
Können die gewünschten Querverbindungen unter Berücksichtigung dieser Regeln in dem NEa oder dem NEz nicht erzeugt werden, versucht das Managementsystem MS, in dem entsprechenden Netzelement die Lage der den Verkehr leitenden cCC-Querverbindung und der schützenden pCC-Querverbindung zu vertauschen, d.h. bei dem in Fig. 1 gezeigten Beispiel wird versucht, die cCC-Querverbindung zwischen den Anschlußpunkten TPa und TPc und die pCC-Querverbindung zwischen den Anschlußpunkten TPa und TPb zu erzeugen.

Ist auch dies nicht möglich, stören die bereits im Telekommunikationsnetz befindlichen Querverbindungen derart, daß das geschützte Segment nicht aktiviert werden kann, ohne zumindest einer dieser bereits vorhandenen Querverbindungen zu löschen.

Wurden die vor der Aktivierung des geschützten Segments bereits im Telekommunikationsnetz befindlichen Querverbindungen unter Anwendung dieser Adaptierungsregeln adaptiert, d.h. übernommen, können die folgenden Fälle vorliegen:
1. Die sich daraus ergebene Konstellation entspricht dem ursprünglichen Wunsch des Netzbetreibers, d.h. bei dem in Fig. 1 gezeigten Beispiel verläuft die geschützte Verbindung PECT zwischen den Netzelementen NEa und NEz über die Netzelemente NEb und NEc, während die schützende Verbindung PING über die Netzelemente NEd und NEe verläuft.
2. Die sich daraus ergebende Konstellation entspricht in beiden Netzelementen NEa und NEz nicht dem ursprünglichen Wunsch des Netzbetreibers, d.h. bei dem in Fig. 1 gezeigten Beispiel verläuft die geschützte Verbindung PECT zwischen den Netzelementen NEa und NEz über die Netzelemente NEd und NEe, während die schützende Verbindung PING über die Netzelemente NEb und NEc verläuft.
3. Die sich daraus ergebende Konstellation entspricht nur in einem der Netzelemente NEa und NEz dem ursprünglichen Wunsch des Netzbetreibers, d.h. entweder nur in NEa oder nur in NEz sind die Querverbindungen wunschgemäß eingerichtet.

Der Fall 1 entspricht dem Idealfall und hat keinerlei weitere Aktionen des Managementsystems MS zur Folge.

Im Fall 2 ist hingegen die Lage der geschützten Verbindung PECT und der schützenden Verbindung PING gegenüber dem ursprünglichen Wunsch vertauscht, so daß in diesem Fall das Managementsystem MS anschließend sein das geschützte Segment beschreibende Modell derart abwandelt, daß der Verlauf der geschützten Verbindung PECT unten und der schützenden Verbindung PING oben in dem Modell festgehalten wird.

Der Fall 3 kann von dem Modell nicht beschrieben werden. Dennoch sind bei der zuvor beschriebenen Vorgehensweise die einzelnen Querverbindungen in den Netzelementen NEa und NEz eingerichtet, um einen Verkehrsfluß zu ermöglichen. In diesem Fall wird jedoch eine Warnung an den Netzbetreiber erzeugt, um diesen darüber zu informieren, daß die eingerichteten Querverbindungen in einem der beiden Netzelemente NEa und NEz nicht seinem ursprünglichen Wunsch entsprechen.

Die zuvor beschriebene erfindungsgemäße Vorgehensweise soll nachfolgend anhand der Darstellungen von Fig. 2 erläutert werden, wobei die einzelnen Darstellungen von Fig. 2 die sich bei der erfindungsgemäßen Adaptierung der in den entsprechenden Darstellungen von Fig. 3 gezeigten Konstellationen ergebende Einrichtung der Querverbindungen in den Netzelementen NEa und NEz zeigen. Es wird somit nachfolgend davon ausgegangen, daß die in Fig. 3A-3F gezeigten Konstellationen gegeben sind und darauf die zuvor beschriebenen erfindungsgemäßen Adaptierungsregeln angewendet werden, wobei in Fig. 2A-2F jeweils das daraus resultierende Ergebnis dargestellt ist. Bei der in Fig. 3A gezeigten Konstellation sind in den Netzelementen NEa und NEz bereits alle Querverbindungen vorhanden, wobei allerdings jede Querverbindung den falschen Attributwert besitzt, d.h. zwischen den Anschlußpunkten TPa und TPb ist jeweils eine schützende pCC-Querverbindung vorhanden, während zwischen den Anschlußpunkten TPa und TPc jeweils eine den Verkehr leitende cCC-Querverbindung vorhanden ist. Dieser Fall entspricht dem zuvor erläuterten Fall 2 und wird demzufolge wie dort beschrieben behandelt, d.h. es wird vermerkt, daß die geschützte Verbindung unten und die schützende Verbindung oben verläuft. Insgesamt entspricht die Behandlung dieser Konstellation der bisherigen Vorgehensweise.

Bei der in Fig. 3B gezeigten Konstellation kann im Netzelement NEa keine wunschgemäße cCC-Querverbindung zwischen die Anschlußpunkte TPa und TPb gelegt werden, da bereits eine cCC-Querverbindung zwischen TPa und TPc vorhanden ist. Daher wird gemäß den zuvor beschriebenen Adaptierungsregeln zwischen den Anschlußpunkten TPa und TPb eine diese cCC-Querverbindung schützende pCC-Querverbindung erzeugt. Im Netzelement NEz kann hingegen die gewünschte Konstellation von Querverbindungen erzeugt werden, so daß sich insgesamt die in Fig. 2B gezeigte Konstellation ergibt und demzufolge der zuvor beschriebene Fall 3 vorliegt.

Bei der in Fig. 3C gezeigten Konstellation muß sowohl in dem Netzelement NEa als auch in dem Netzelement NEz die pCC-Querverbindung zwischen die Anschlußpunkte TPa und TPb gelegt werden, da jeweils bereits eine cCC-Querverbindung zwischen TPa und TPc vorhanden ist. Es ergibt sich in den Netzelementen NEa und NEz die in Fig. 2C gezeigte Konstellation, was dem zuvor erläuterten Fall 2 entspricht.

Bei der in Fig. 3D gezeigten Konstellation sind im Netzelemente NEa bereits beide Querverbindungen vorhanden. Allerdings besitzen sie jeweils den falschen Attributwert. Im Netzelement NEz können hingegen die Querverbindungen wie gewünscht eingerichtet werden, so daß die in Fig. 2D gezeigte Konstellation erzeugt wird, welche Fall 3 entspricht.

In Fig. 3E sind in den Netzelementen NEa und NEz bereits alle vier Querverbindungen vorhanden, wobei die beiden Querverbindungen im Netzelement NEa jedoch den falschen Attributwert besitzen, während die Lage der Querverbindungen im Netzelement NEz korrekt ist. Diese Konstellation muß unter Berücksichtigung der obigen Adaptierungsregeln übernommen werden (vgl. Fig. 2E), so daß Fall 3 vorliegt.

Bei der in Fig. 3F gezeigten Konstellation ist im Netzelement NEa bereits eine cCC-Querverbindung zwischen TPa und TPb vorhanden, so daß die noch fehlende pCC-Querverbindung wunschgemäß zwischen TPa und TPc eingerichtet werden kann. Im Netzelement NEz sind bereits beide Querverbindungen vorhanden, wobei jedoch beide den falschen Attributwert aufweisen. Durch die erfindungsgemäße Adaptierung ergibt sich somit die in Fig. 2F gezeigte Konstellation, und es liegt Fall 3 vor.

Insgesamt ist somit festzuhalten, daß die Netzelemente NEa und NEz bei der Einrichtung noch fehlender Querverbindungen in den Netzelementen NEa und NEz vollkommen unabhängig voneinander betrachtet werden. Infolge der erfindungsgemäßen Adaptierung ist gegenüber der herkömmlichen Vorgehensweise eine zusätzliche Konstellation, nämlich die in Fig. 2C gezeigte Konstellation, durch das vorgegebene Modell des Managementsystems MS beschreibbar. Zudem werden gegenüber der eingangs beschriebenen herkömmlichen Vorgehensweise nunmehr alle in Fig. 2 gezeigten Konstellationen vollständig adaptiert, um einen Verkehrsfluß zu ermöglichen, obwohl die sich dabei ergebenden und in Fig. 2B und 2D-2F gezeigten Konstellationen nicht von dem Modell des Managementsystems MS beschrieben werden können, da jeweils der zuvor erläuterte Fall 3 gegeben ist. In diesen Fällen wird jedoch eine entsprechende Warnung ausgegeben.

## Patentansprüche

1. Verfahren zum Einrichten eines geschützten Kommunikationssegments zwischen zwei Netzelementen eines Telekommunikationsnetzes,
wobei das geschützte Kommunikationssegment zwischen einem ersten Netzelement (NEa) und einem zweiten Netzelement (NEz) eine geschützte Verbindung (PECT) und eine diese Verbindung schützende Verbindung (PING) umfaßt,
wobei das erste und zweite Netzelement (NEa, NEz) jeweils Anschlußpunkte (TPa...TPc) umfaßt, über welche das jeweilige Netzelement (NEa, NEz) mit einem benachbarten Netzelement verbunden ist, und
wobei jeweils innerhalb des ersten und zweiten Netzelements (NEa, NEz) des geschützten Kommunikationssegments für die geschützte Verbindung eine den Kommunikationsverkehr leitende erste Querverbindung (cCC) zwischen einem ersten Anschlußpunkt (TPa) und einem zweiten Anschlußpunkt (TPb) und für die schützende Verbindung eine die entsprechende erste Querverbindung (cCC) schützende zweite Querverbindung (pCC) zwischen dem ersten Anschlußpunkt (TPa) und einem dritten Anschlußpunkt (TPc) einzurichten sind,
**dadurch gekennzeichnet,**
**daß** die ersten und zweiten Querverbindungen (cCC, pCC) in dem ersten bzw. zweiten Netzelement (NEa, NEz) jeweils unabhängig von in dem zweiten bzw. ersten Netzelement (NEa, NEz) bereits vorhandenen Querverbindungen eingerichtet werden.

2. Verfahren nach Anspruch 1,
**dadurch gekennzeichnet,**
**daß** die ersten und zweiten Querverbindungen (cCC, pCC) in dem ersten und zweiten Netzelement (NEa, NEz) jeweils auch dann eingerichtet werden, wenn die Kombination der in dem ersten Netzelement (NEa) einzurichtenden ersten und zweiten Querverbindungen (cCC, pCC) mit den in dem zweiten Netzelement (NEz) einzurichtenden ersten und zweiten Querverbindungen (cCC, pCC) nicht derart ist, daß **dadurch** die geschützte Verbindung (PECT) und die schützende Verbindung (PING) entweder in wunschgemäßer Lage oder in miteinander vertauschter Lage gebildet werden.

3. Verfahren nach Anspruch 1 oder 2,
**dadurch gekennzeichnet**,
a) daß in dem ersten und zweiten Netzelement (NEa, NEz) jeweils die erste Querverbindung (cCC) zwischen dem entsprechenden ersten und zweiten Anschlußpunkt (TPa, TPb) eingerichtet wird, falls nicht der entsprechende erste Anschlußpunkt (TPa) oder der entsprechende zweite Anschlußpunkt (TPb) bereits mit einer ersten oder zweiten Querverbindung (cCC, pCC) verbunden ist, und
b) daß anschließend in dem ersten und zweiten Netzelement (NEa, NEz) jeweils die zweite Querverbindung (pCC) zwischen dem entsprechenden ersten und dritten Anschlußpunkt (TPa, TPc) nur eingerichtet wird, falls der entsprechende erste oder dritte Anschlußpunkt (TPa, TPc) bereits mit einer ersten Querverbindung (cCC) verbunden ist und für diese bereits vorhandene erste Querverbindung (cCC) nicht bereits eine diese erste Querverbindung (cCC) schützende zweite Querverbindung (pCC) eingerichtet ist.

4. Verfahren nach Anspruch 3,
**dadurch gekennzeichnet,**
**daß** für den Fall, daß in dem ersten oder zweiten Netzelement (NEa, NEz) mit Hilfe der Schritte a) und b) keine Kombination aus einer ersten und zweiten Querverbindung (cCC, pCC) eingerichtet werden konnte, die folgenden Schritte c) und d) durchgeführt werden:
c) in dem ersten bzw. zweiten Netzelement (NEa, NEz) wird die erste Querverbindung (cCC) zwischen dem entsprechenden ersten und dritten Anschlußpunkt (TPa, TPc) eingerichtet, falls nicht der entsprechende erste Anschlußpunkt (TPa) oder der entsprechende dritte Anschlußpunkt (TPc) bereits mit einer ersten oder zweiten Querverbindung (cCC, pCC) verbunden ist, und
d) anschließend wird in dem ersten bzw. zweiten Netzelement (NEa, NEz) die zweite Querverbindung (pCC) zwischen dem entsprechenden ersten und zweiten Anschlußpunkt (TPa, TPb) eingerichtet, falls der entsprechende erste oder zweite Anschlußpunkt (TPa, TPb) bereits mit einer ersten Querverbindung (cCC) verbunden ist und für diese bereits vorhandene erste Querverbindung (cCC) nicht bereits eine diese erste Querverbindung (cCC) schützende zweite Querverbindung (pCC) eingerichtet ist.

5. Verfahren nach Anspruch 4,
**dadurch gekennzeichnet,**
**daß** eine Warnung erzeugt wird, falls nach Durchführung der Schritte a)-d) die Kombination der in dem ersten Netzelement (NEa) eingerichteten ersten und zweiten Querverbindungen (cCC, pCC) mit den in dem zweiten Netzelement (NEz) eingerichteten ersten und zweiten Querverbindungen (cCC, pCC) derart ist, daß **dadurch** die geschützte Verbindung (PECT) und die schützende Verbindung (PING) weder in wunschgemäßer Lage noch in miteinander vertauschter Lage gebildet werden.

6. Telekommunikationsnetz,
mit mehreren Netzelementen (NEa...NEz), wobei jedes Netzelement (NEa...NEz) Anschlußpunkte (TPa...TPc) umfaßt, über welche das jeweilige Netzelement (NEa...NEz) mit einem benachbarten Netzelement (NEa...NEz) verbunden ist,
mit einem zwischen einem ersten Netzelement (NEa) und einem zweiten Netzelement (NEz) einzurichtenden geschützte Kommunikationssegment, welches zwischen dem ersten Netzelement (NEa) und dem zweiten Netzelement (NEz) eine geschützte Verbindung (PECT) und eine diese Verbindung schützende Verbindung (PING) umfaßt, und
mit Steuermitteln (MS) zur Einrichtung, jeweils innerhalb des ersten und zweiten Netzelements (NEa, NEz), einer den Kommunikationsverkehr leitenden ersten Querverbindung (cCC) für die geschützte Verbindung zwischen einem ersten Anschlußpunkt (TPa) und einem zweiten Anschlußpunkt (TPb) und einer die entsprechende erste Querverbindung (cCC) schützenden zweiten Querverbindung (pCC) für die schützende Verbindung zwischen dem ersten Anschlußpunkt (TPa) und einem dritten Anschlußpunkt (TPc), um somit das geschützte Kommunikationssegment einzurichten,
**dadurch gekennzeichnet,**
**daß** die Steuermittel (MS) derart ausgestaltet sind, daß sie die ersten und zweiten Querverbindungen (cCC, pCC) in dem ersten bzw. zweiten Netzelement (NEa, NEz) jeweils unabhängig von in dem zweiten bzw. ersten Netzelement (NEa, NEz) bereits vorhandenen Querverbindungen einrichten.

7. Telekommunikationsnetz nach Anspruch 6,
**dadurch gekennzeichnet,**
**daß** die Steuermittel (MS) zur Durchführung des Verfahrens nach einem der Ansprüche 1-5 ausgestaltet sind.

8. Telekommunikationsnetz nach Anspruch 6,
**dadurch gekennzeichnet,**
**daß** die Steuermittel (MS) zur Durchführung des Verfahrens nach Anspruch 5 ausgestaltet sind und Speichermittel umfassen, um die vertauschte Lage der geschützten Verbindung (PECT) und der schützenden Verbindung (PING) zu speichern, falls nach Durchführung der Schritte a)-d) die Kombination der in dem ersten Netzelement (NEa) eingerichteten ersten und zweiten Querverbindungen (cCC, pCC) mit den in dem zweiten Netzelement (NEz) eingerichteten ersten und zweiten Querverbindungen (cCC, pCC) derart ist, daß **dadurch** die geschützte Verbindung (PECT) und die schützende Verbindung (PING) in miteinander vertauschter Lage gebildet sind.

9. Telekommunikationsnetz nach einem der Ansprüche 6-8,
**dadurch gekennzeichnet,**
**daß** die Steuermittel (MS) derart ausgestaltet sind, daß sie jeder Querverbindung eines Netzelements (NEa...NEz) ein bestimmtes Attribut zuweisen, durch welches die entsprechende Querverbindung als eine den Kommunikationsverkehr leitende erste Querverbindung (cCC) oder als eine schützende zweite Querverbindung (pCC) definiert ist.

## Claims

1. Method for configuring a protected communication segment between two network elements of a telecommunications network,
in which the protected communication segment between a first network element (NEa) and a second network element (NEz) comprises a protected connection (PECT) and a connection protecting this connection (PING),
in which the first and second network element (NEa, NEz) in each case includes termination points (TPa...TPc) via which the specific network element (NEa, NEz) is connected to a neighbouring network element, and
in which, within the first and the second network element (NEa, NEz) of the protected communication segment for the protected connection, a first cross connection (cCC) carrying the communication traffic must be configured in each case between a first termination point (TPa) and a second termination point (TPb) and for the protecting connection a second cross connection (pCC) protecting the corresponding first cross connection (cCC) between the first termination point (TPa) and a third termination point (TPc),
**characterized in that**,
the first and second cross connections (cCC, pCC) in the first or second network element (NEa, NEz) in each case are configured independently from the cross connections which are already present in the second or the first network element (NEa, NEz).

2. Method according to claim 1,
**characterized in that**,
the first and the second cross connections (cCC, pCC) in the first and the second network element (NEa, NEz) are also configured in each case if the combination of the first and second cross connections (cCC, pCC) to be configured in the first network element (NEa) with the first and the second cross connections (cCC, pCC) to be configured in the second network element (NEz) is not such that the protected connection (PECT) and the protecting connection (PING) are therefore configured either in a requested position or in an interchanged position.

3. Method according to claim 1 or 2,
**characterized in that**,
a) in the first and the second network element (NEa, NEz) the first cross connection (cCC) is in each case configured between the corresponding first and second termination point (TPa, TPb) if the corresponding first termination point (TPa) or the corresponding second termination point (TPb) has not already been connected to a first or a second cross connection (cCC, pCC), and
b) subsequently in the first and the second network element (NEa, NEz) the second cross connection (pCC) between the corresponding first and third termination point (TPa, TPc) is only configured if the corresponding first or third termination point (TPa, TPc) has already been connected to a first cross connection (cCC) and for this first cross connection (cCC) which is already present, a second cross connection (pCC) protecting this first cross connection (cCC) has not already been configured.

4. Method according to claim 3,
**characterized in that**,
for the case that in the first or the second network element (NEa, NEz) by using steps a) and b), a combination of a first and a second cross connection (cCC, pCC) could not be configured, the following steps c) and d) are carried out:
c) in the first or second network element (NEa, NEz), the first cross connection (cCC) is configured between the corresponding first and third termination point (TPa, TPc) if the corresponding first termination point (TPa) or the corresponding third termination point (TPc) has not already been connected to a first or second cross connection (cCC, pCC), and
d) subsequently in the first or second network element (NEa, NEz) the second cross connection (pCC) is configured between the corresponding first and second termination point (TPa, TPb) if the corresponding first or second termination point (TPa, TPb) has already been connected to a first cross connection (cCC) and for this first cross connection (cCC) which is already present, a second cross connection (pCC) protecting this first cross connection (cCC) has not already been configured.

5. Method according to claim 4,
**characterized in that**,
a warning is generated if, after carrying out steps a)-d), the combination of the first and second cross connections (cCC, pCC) configured in the first network element (NEa) with the first and second cross connections (cCC, pCC) configured in the second network element (NEz) is such that the protected connection (PECT) and the protecting connection (PING) are therefore configured neither in a requested position nor in an interchanged position.

6. Telecommunications network,
with a number of network elements (NEa ...NEz), in which each network element (NEa ...NEz) includes termination points (TPa...TPc) via which the specific network element (NEa...NEz) is connected to a neighbouring network element (NEa ... NEz), to a protected communication segment to be configured between a first network element (NEa) and a second network element (NEz) which includes between the first network element (NEa) and the second network element (NEz) a protected connection (PECT) and a connection protecting this connection (PING), and with management means (MS) for configuring in each case within the first and second network element (NEa, NEz), a first cross connection (cCC) carrying the communication traffic for the protected connection between a first termination point (TPa) and a second termination point (TPb) and a second cross connection (pCC) protecting the corresponding first cross connection (cCC) for the protecting connection between the first termination point (TPa) and a third termination point (TPc) in order to configure the protected communication segment,
**characterized in that**,
the management means (MS) are embodied in such a way that they in each case configure the first and the second cross connections (cCC, pCC) in the first or the second network element (NEa, NEz) independently from the cross connections which are already present in the second or first network element (NEa, NEz).

7. Telecommunications network according to claim 6,
**characterized in that**,
the management means (MS) are embodied for carrying out the method according to one of claims 1-5.

8. Telecommunications network according to claim 6,
**characterized in that**,
the management means (MS) for carrying out the method according to claim 5 are embodied and include storage means in order to store the interchanged position of the requested connection (PECT) and the protecting connection (PING) if after carrying out the steps a)-d), the combination of the first and second cross connections (cCC, pCC) configured in the first network element (NEa) with the first and the second cross connections (cCC, pCC) configured in the second network element (NEz) is such that the protected connection (PECT) and the protecting connection (PING) are therefore configured in an interchanged position.

9. Telecommunications network according to one of the claims 6-8,
**characterized in that**,
the management means (MS) are embodied in such a way that they assign a specific attribute to each cross connection of a network element (NEa ...NEz) by means of which the corresponding cross connection is defined as a first cross connection (cCC) carrying the communication traffic or as a protecting second cross connection (pCC).

## Revendications

1. Procédé pour configurer un segment de communication sécurisé entre deux éléments de réseau d'un réseau de télécommunication,
le segment de communication sécurisé entre un premier élément de réseau (NEa) et un deuxième élément de réseau (NEz) comprenant une connexion sécurisée (PECT) et une connexion (PING) sécurisant cette connexion,
le premier et le deuxième éléments de réseau (NEa, NEz) comprenant respectivement des points de connexion (TPa ... TPc), par l'intermédiaire desquels l'élément de réseau respectif (NEa, NEz) est connecté à un élément de réseau voisin, et
une première connexion transversale (cCC) guidant le trafic de communication étant à configurer pour la connexion sécurisée, entre un premier point de connexion (TPa) et un deuxième point de connexion (TPb), à l'intérieur du premier et du deuxième éléments de réseau (NEa, NEz) du segment de communication sécurisé, et une deuxième connexion transversale (pCC) sécurisant la première connexion transversale correspondante (cCC) étant à configurer pour la connexion sécurisante, entre le premier point de connexion (TPa) et un troisième point de connexion (TPc),
**caractérisé en ce**
**que** les premières et les deuxièmes connexions transversales (cCC, pCC) sont configurées dans le premier resp. dans le deuxième élément de réseau (NEa, NEz), chacune indépendamment des connexions transversales déjà présentes dans le deuxième resp. le premier élément de réseau (NEa, NEz).

2. Procédé selon la revendication 1,
**caractérisé en ce**
**que** les premières et les deuxièmes connexions transversales (cCC, pCC) dans le premier et le deuxième éléments de réseau (NEa, NEz) sont respectivement également configurées lorsque la combinaison des premières et des deuxièmes connexions transversales (cCC, pCC) à configurer dans le premier élément de réseau (NEa) avec les premières et deuxièmes connexions transversales (cCC, pCC) à configurer dans le deuxième élément de réseau (NEz) n'est pas telle qu'ainsi la connexion sécurisée (PECT) et la connexion sécurisante (PING) sont formées soit dans la position souhaitée soit en position réciproquement permutée.

3. Procédé selon la revendication 1 ou 2,
**caractérisé**
a) en ce que dans le premier et le deuxième éléments de réseau (NEa, NEz), la première connexion transversale respective (cCC) entre le premier et le deuxième points de connexion (TPa, TPb) correspondant est configurée, au cas où le premier point de connexion correspondant (TPa) ou le deuxième point de connexion correspondant (TPb) n'est pas déjà en connexion avec une première ou une deuxième connexion transversale (cCC, pCC), et
b) en ce qu'ensuite dans le premier et le deuxième éléments de réseau (NEa, NEz), la deuxième connexion transversale respective (pCC) entre le premier et le troisième points de connexion (TPa, TPc) correspondant est uniquement configurée, au cas où le premier ou le troisième point de connexion correspondant (TPa, TPc) est déjà connecté à une première connexion transversale (cCC) et que pour cette première connexion transversale (cCC) déjà présente, n'est pas déjà configurée une deuxième connexion transversale (pCC) sécurisant cette première connexion transversale (cCC).

4. Procédé selon la revendication 3,
**caractérisé en ce**
**que** pour le cas où aucune combinaison d'une première et d'une deuxième connexions transversales (cCC, pCC) n'a pu être configurée dans le premier ou le deuxième élément de réseau (NEa, NEz) à l'aide des étapes a) et b), les étapes suivantes c) et d) sont exécutées :
c) dans le premier resp. le deuxième élément de réseau (NEa, NEz), la première connexion transversale (cCC) entre le premier et le troisième points de connexion correspondants (TPa, TPc) est configurée, au cas où le premier point de connexion correspondant (TPa) ou le troisième point de connexion correspondant (TPc) n'est pas déjà connecté à une première ou une deuxième connexion transversale (cCC, pCC), et
d) dans le premier resp. le deuxième élément de réseau (NEa, NEz), la deuxième connexion transversale (pCC) entre le premier et le deuxième points de connexion (TPa, TPb) correspondant est ensuite configurée au cas où le premier ou le deuxième point de connexion correspondant (TPa, TPb) est déjà connecté à une première connexion transversale (cCC) et que pour cette première connexion transversale (cCC) déjà présente une deuxième connexion transversale (pCC) sécurisant cette première connexion transversale (cCC) n'a pas déjà été configurée.

5. Procédé selon la revendication 4,
**caractérisé en ce**
**qu'**un avertissement est généré au cas où, après la réalisation des étapes a) - d), la combinaison des premières et deuxièmes connexions transversales (cCC, pCC) configurées dans le premier élément de réseau (NEa) avec les premières et deuxièmes connexions transversales (cCC, pCC) configurées dans le deuxième élément de réseau (NEz) est telle qu'ainsi la connexion sécurisée (PECT) et la connexion sécurisante (PING) ne sont formées ni dans la position souhaitée ni en position réciproquement permutée.

6. Réseau de télécommunication,
comprenant plusieurs éléments de réseau (NEa ... NEz), chaque élément de réseau (NEa ... NEz) comprenant des points de connexion (TPa ... TPc) par l'intermédiaire desquels l'élément de réseau respectif (NEa ... NEz) est connecté à un élément de réseau voisin (NEa ... NEz),
comprenant un segment de communication sécurisé à configurer entre un premier élément de réseau (NEa) et un deuxième élément de réseau (NEz), ce segment de communication comprenant une connexion sécurisée (PECT) entre le premier élément de réseau (NEa) et le deuxième élément de réseau (NEz) et une connexion (PING) sécurisant cette connexion, et comprenant des moyens de commande (MS) pour la configuration, respectivement à l'intérieur du premier et du deuxième éléments de réseau (NEa, NEz), d'une première connexion transversale (cCC) guidant le trafic de communication pour la connexion sécurisée entre un premier point de connexion (TPa) et un deuxième point de connexion (TPb), et d'une deuxième connexion transversale (pCC) sécurisant la première connexion transversale correspondante (cCC) pour la connexion sécurisante entre le premier point de connexion (TPa) et un troisième point de connexion (TPc), afin de configurer ainsi le segment de communication sécurisé,
**caractérisé en ce**
**que** les moyens de commande (MS) sont exécutés de telle manière qu'ils configurent les premières et les deuxièmes connexions transversales (cCC, pCC) dans le premier resp. le deuxième élément de réseau (NEa, NEz), respectivement indépendamment de connexions transversales déjà présentes dans le deuxième resp. le premier élément de réseau (NEa, NEz).

7. Réseau de télécommunication selon la revendication 6,
**caractérisé en ce**
**que** les moyens de commande (MS) sont exécutés pour la réalisation du procédé selon l'une quelconque des revendications 1 à 5.

8. Réseau de télécommunication selon la revendication 6,
**caractérisé en ce**
**que** les moyens de commande (MS) sont exécutés pour la réalisation du procédé selon la revendication 5 et qu'ils comprennent des moyens de mémoire afin de mémoriser la position permutée de la connexion sécurisée (PECT) et de la connexion sécurisante (PING), au cas où, après la réalisation des étapes a) - d), la combinaison des premières et des deuxièmes connexions transversales (cCC, pCC), configurées dans le premier élément de réseau (NEa), avec les premières et deuxièmes connexions transversales (cCC, pCC), configurées dans le deuxième élément de réseau (NEz), est telle qu'ainsi la connexion sécurisée (PECT) et la connexion sécurisante (PING) sont formées en position réciproquement permutée.

9. Réseau de télécommunication selon l'une quelconque des revendications 6 à 8,
**caractérisé en ce**
**que** les moyens de commande (MS) sont exécutés de telle manière qu'ils affectent à chaque connexion transversale d'un élément de réseau (NEa ...NEz) un certain attribut, au moyen duquel la connexion transversale correspondante est définie comme une première connexion transversale (cCC) guidant le trafic de communication ou comme une deuxième connexion transversale sécurisante (pCC).
